# EUROPEAN PATENT APPLICATION

(11) **EP 3 183 948 A1**
(43) Date of publication of application: **28.06.2017**
(21) Application number: 16205309.4
(22) Date of filing: 20.12.2016
(51) Int. Cl.: A01B 33/02

(54) **TILLER**

(30) Priority: 22.12.2015 JP 2015249915
(71) Applicant: Honda Motor Co., Ltd., Tokyo 107-8556 (JP)
(72) Inventor: ITO, Tomoki, Wako-shi, Saitama 351-0193 (JP); KOBAYASHI, Hideaki, Wako-shi, Saitama 351-0193 (JP); MATSUMOTO, Takuya, Wako-shi, Saitama 351-0193 (JP)
(74) Representative: Weickmann & Weickmann PartmbB

(57) **Abstract**

Provided is an art of making a tilling depth of a rotary constant, in a front rotary type tiller. A tiller (10) has a driving wheel (13) supported by a machine body (12), and having a rotary (14) that tills soil (21), in front of the driving wheel (13), the tiller (10) further has a tilling depth stabilizing apparatus (20) that is located behind the driving wheel (13), and the tilling depth stabilizing apparatus (20) includes a contact portion (40) capable of contacting a top surface of the soil (21) and capable of sliding on the top surface, and a height adjusting device (28) that adjusts a height of the contact portion (40) relative to the driving wheel (13).

## Description

### BACKGROUND OF THE INVENTION

### Field of the Invention

The present invention relates to a front rotary type tiller.

### Description of the Related Art

As a tiller, there is a tiller having a machine body including an engine, driving wheels which are supported by the machine body, a rotary that digs up soil by rotation of claws, and a handle which a worker grasps. As a prior art concerning a tiller like this, there is the art disclosed in Japanese Patent Laid-Open No. 2009-82049.

Japanese Patent Laid-Open No. 2009-82049 discloses a so-called front rotary type tiller. In the front rotary type tiller, the rotary is provided at a front side, and the handle is provided at the rear side, with the driving wheels as a reference.

Incidentally, at a time of tilling, a rotating rotary sometimes hits against the hard soil. In a front rotary type tiller, a force is sometimes applied to a rotary in a direction to be away from the soil, with the driving wheels as an axis. In this case, a tilling depth of the rotary is likely to change.

In order to make the tilling depth of the rotary constant, it is conceivable to bring the center of gravity of the machine body to the front, for example, but if the center of gravity is away from the handle, operability of the tiller is worsened. If the claws of the rotary are changed to the claws that easily bite into the soil, durability of the claws is reduced.

It is desirable to make the tilling depth of the rotary at the time of tilling constant without changing the characteristics and components of the tiller.

The present invention addresses a problem to provide an art of making a tilling depth of a rotary constant in a front rotary type tiller.

### SUMMARY OF THE INVENTION

According to the invention according to claim 1, there is provided a tiller which is a tiller having a driving wheel supported by a machine body, and having a rotary that tills soil, in front of the driving wheel,
the tiller further having a tilling depth stabilizing apparatus that is located behind the driving wheel,
wherein the tilling depth stabilizing apparatus includes a contact portion capable of contacting a top surface of the soil and capable of sliding on the top surface, and a height adjusting device that adjusts a height of the contact portion relative to the driving wheel.

As described in claim 2, it is preferable that the tilling depth stabilizing apparatus further has a swing arm that extends from the machine body and is swingably mounted to the machine body,
the contact portion is fixed to the swing arm, and
the height adjusting device has
an extension and contraction mechanism that extends from the machine body to the swing arm and is capable of extending and contracting, and
operation means for switching an adjustment mode in which a length of the extension and contraction mechanism can be adjusted, and a fixed mode in which the length of the extension and contraction mechanism is fixed.

As described in claim 3, it is preferable that the extension and contraction mechanism has urging means that urges in an extending direction, and
a mounting point where the extension and contraction mechanism is mounted to the machine body is located above a swing shaft for the swing arm.

In the invention according to claim 1, the tiller has the tilling depth stabilizing apparatus which is located behind the driving wheel, and the tilling depth stabilizing apparatus has the contact portion capable of contacting the top surface of the soil. The rotary sometimes hits against the hard soil. In this case, a force is applied to the rotary in a direction to be away from the soil with the driving wheel as an axis. At this time, the contact portion contacts the top surface of the soil, and thereby the tilling depth of the rotary can be restrained from being shallow. Thereby, the tilling depth of the rotary at the time of tilling can be made constant.

In addition, the contact portion is slidable on the top surface of the soil. Consequently, when the tiller travels at the time of tilling, contact of the tilling depth stabilizing apparatus and the soil becomes smooth, and the tilling depth stabilizing apparatus does not become resistance to tilling. Even when the contact portion contacts the top surface of the soil, the tiller can be smoothly operated.

In addition, the tilling depth stabilizing apparatus has the height adjusting device which adjusts the height of the contact portion relative to the driving wheel. The contact portion has the height relative to the driving wheel adjusted by the height adjusting device. Thereby, the tilling depth of the rotary which is disposed in front of the driving wheel is adjusted.

In the invention according to claim 2, the tilling depth stabilizing apparatus has the swing arm, and the contact portion is fixed to the swing arm. The height adjusting device has the extension and contraction mechanism which extends from the machine body to the swing arm, and the operation means for switching the adjustment mode in which the length of the extension and contraction mechanism can be adjusted, and the fixed mode in which the length of the extension and contraction mechanism is fixed. By adopting the swing arm, the extension and contraction mechanism and the operation means, the tilling depth stabilizing apparatus capable of adjusting the height can be easily configured.

In particular, the tilling depth stabilizing apparatus enables adjustment of the height relative to the driving wheel by causing the swing arm to swing up and down. That is, the swing arm is caused to swing in accordance with the tilling depth of the rotary, and the contact portion which is fixed to the swing arm can be brought into contact with the top surface of the soil. When the tilling depth of the rotary is changed, the machine body swings with the driving wheel as a rotating shaft. Here, swing of the machine body is accompanied by displacement in the vertical direction and displacement in the longitudinal direction. Consequently, if the height adjusting device which changes in only the vertical direction is provided, with respect to the machine body which swings, displacement in the longitudinal direction of the machine body can become a hindrance to displacement in the vertical direction of the height adjusting device. Meanwhile, when the swing arm is adopted in the tilling stabilizing apparatus, swing of the machine body and swing of the swing arm respectively become smooth, and height adjustment of the tilling depth stabilizing apparatus is facilitated.

In the invention according to claim 3, the extension and contraction mechanism has urging means that urges in the extending direction, and the mounting point where the extension and contraction mechanism is mounted to the machine body is located above the swing shaft for the swing arm. The mounting point of the extension and contraction mechanism is located above the swing shaft, and therefore, when the swing arm is caused to swing downward, the urging force by the urging means which is provided in the extension and contraction mechanism can be used. In this case, use of the tiller by the worker as follows is facilitated.

At first, the rotary, the driving wheel and the contact portion are brought into contact with the soil. Next, the driving wheel as well as the machine body is lifted up (the swing arm is caused to swing downward, and the extension and contraction mechanism performs an extending operation). The machine body and the driving wheel are supported by the rotary and the contact portion. Next, the rotary and the driving wheel are rotated. The rotary starts tilling, and the driving wheel idles. As tilling by the rotary advances, the driving wheel displaces toward a lower side to be close to the soil. When the driving wheel contacts the soil, the tiller starts tilling to a front direction. Thereby, after the place where tilling is started is tilled to a predetermined depth, movement of the tiller can be started.

When tilling is performed as described above, the machine body and the driving wheel need to be lifted up. At the time of lifting up, the urging means of the extension and contraction mechanism can be used. The urging force assists in lifting up the machine body and the driving wheel, and therefore, the worker can easily lift up the machine body and the driving wheel.

### BRIEF DESCRIPTION OF THE DRAWINGS

FIG. 1 is a perspective view of a tiller according to an embodiment of the present invention;
FIG. 2 is an exploded perspective view of a tilling depth stabilizing apparatus of the tiller shown in FIG. 1;
FIGS. 3A and 3B are views explaining a height adjusting device and an operation of operation means of the tiller shown in FIG. 1;
FIGS. 4A to 4C are views explaining a tilling method by the tiller shown in FIG. 1;
FIG. 5 is a view explaining an operation of the tiller shown in FIG. 1; and
FIGS. 6A and 6B are views comparing the height adjusting device of the tilling stabilizing apparatus shown in FIG. 2.

### DETAILED DESCRIPTION OF THE PREFERRED EMBODIMENTS

An embodiment of the present invention will be described hereinafter on the basis of the accompanying drawings. Note that in the explanation, a left and a right refer to a left and a right with a worker of a tiller as a reference, and a front and a rear refers to a front and a rear with a traveling direction of the tiller as a reference. Further, in the drawings, Fr represents the front, Rr represents the rear, L represents the left seen from the worker, R represents the right seen from the worker, Up represents up, and Dn represents down.

### <Embodiment>

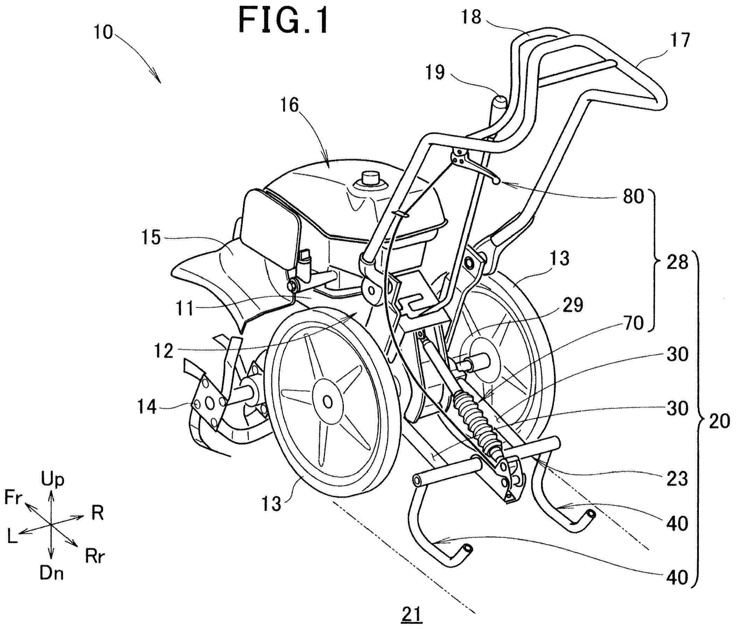

Reference is made to FIG. 1. FIG. 1 shows a so-called front rotary type tiller 10. The front rotary type tiller 10 is composed of a machine body 12 including an engine 11, left and right driving wheels 13 and 13 which are supported by the machine body 12, a rotary 14 which is located in front of the driving wheels 13 and 13 and digs up soil 21 by rotation of claws, a rotary cover 15 which is provided above the rotary 14, a fuel tank 16 which is provided at an upper portion of the engine 11, a handle 17 which extends upward from a rear portion of the machine body 12, a clutch lever 18 which is provided swingably along a shape of the handle 17, a gear shift lever 19 which extends from the rear portion of the machine body 12 to a vicinity of the handle 17, and a tilling depth stabilizing apparatus 20 which is located behind the driving wheels 13 and 13.

The clutch lever 18 performs switch of transmission of power from the engine 11 to the driving wheels 13 and 13 and the rotary 14. The gear shift lever 19 performs regulation of a speed of the driving wheels 13 and 13, and switch of a rotational speed of the rotary 14. A worker performs tilling work by operating the clutch lever 18 and the gear shift lever 19 with the handle 17.

Hereinafter, the tilling depth stabilizing apparatus 20 which stabilizes a tilling depth by the rotary 14 at a time of tilling work will be described.

The tilling depth stabilizing apparatus 20 includes left and right swing arms 30 and 30 which are provided swingably with respect to an rotating shaft 29 of the driving wheels 13 and 13, a connection portion 23 which connects rear ends of the left and right swing arms 30 and 30, left and right skids 40 and 40 (contact portions 40 and 40) which extend rearward from the connection portion 23 to contact the soil, and a height adjusting device 28 which adjusts heights of the skids 40 and 40 relative to the driving wheels 13.

The height adjusting device 28 has a gas spring 70 (an extension and contraction mechanism 70) which extends from the machine body 12 to the connection portion 23 and is capable of extending and contracting, and operation means 80 for operating the gas spring 70. By operating the operation means 80, an adjustment mode in which a length of the gas spring 70 can be adjusted and a fixed mode in which the length of the gas spring 70 is fixed can be switched. For the gas spring 70 and the operation means 80, well-known structures can be adopted. Details of the height adjusting device 28 will be described later.

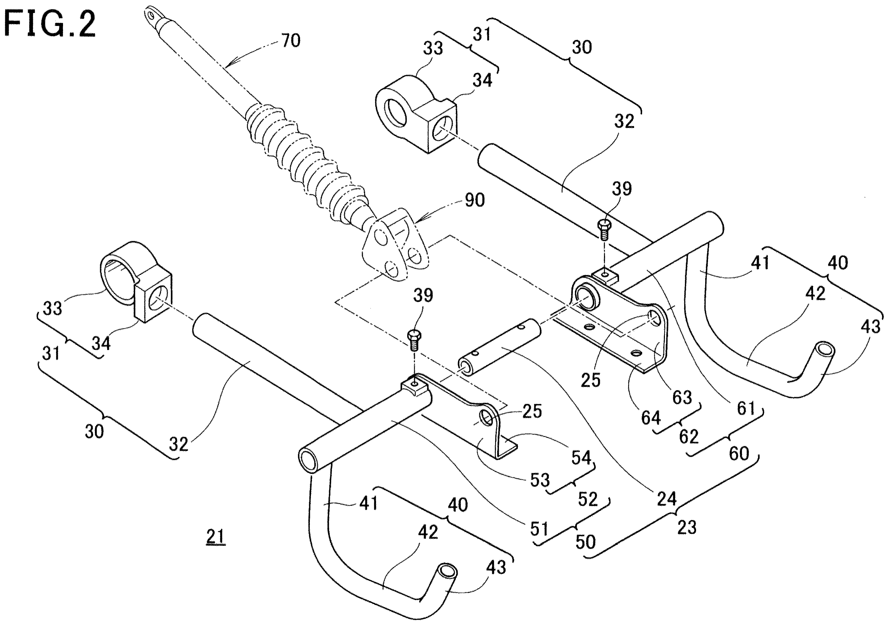

FIG. 2 is referred to additionally. The left and right swing arms 30 and 30 are respectively composed of left and right arm support portions 31 and 31 which are rotatably mounted to the machine body 12, and left and right arm main bodies 32 and 32 which have one ends mounted to the left and right arm support portions 31 and 31 and present round bar shapes.

The left and right arm support portions 31 and 31 are respectively composed of left and right cylinder portions 33 and 33 through which the rotating shaft 29 (refer to FIG. 1) of the driving wheels 13 is inserted, and left and right fitting portions 34 and 34 which are formed integrally with the left and right cylinder portions 33 and 33 and in which one ends of the arm main bodies 32 and 32 are fitted. Bearings can be provided in inner peripheries of the left and right cylinder portions 33 and 33.

The connection portion 23 is composed of a first connection member 50 which is connected to a rear end of the left swing arm 30, a second connection member 60 which is connected to a rear end of the right swing arm 30, and a connection pipe 24 which connects the first and second connection members 50 and 60.

The first connection member 50 is composed of a first pipe 51 which extends in a machine body width direction, and a first plate 52 which is fixed to an end portion of the first pipe 51.

The first plate 52 presents a substantially L-shape in rear view, and is composed of a first side surface portion 53 which is fixed to an end portion at a side of a machine body center, of the first pipe 51, and a first bottom surface portion 54 that extends from a lower end of the first side surface portion 53 to the center of the machine body 12. The end portion at a right side of the first pipe 51 is fitted in a hole which is bored in a front portion of the first side surface portion 53.

The second connection member 60 has a configuration which is symmetrical with the first connection member 50, with the connection pipe 24 as a reference. That is, the second connection member 60 is composed of a second pipe 61 which extends in the machine body width direction, and a second plate 62 which is fixed to an end portion of the second pipe 61.

The second plate 62 presents a substantially L-shape in rear view, and is composed of a second side surface portion 63 which is fixed to an end portion at a side of the machine body center, of the second pipe 61, and a second bottom surface portion 64 which extends toward the center of the machine body 12 from a lower end of the second side surface portion 63. The end portion at a left side of the second pipe 61 is fitted in a hole which is bored in a front portion of the second side surface portion 63.

Both ends of the connection pipe 24 are respectively inserted into the first pipe 51 and the second pipe 61, and are fixed by bolts 39 and nuts. The nuts are welded to an interior of the connection pipe 24. In a connected state, the first bottom surface portion 54 and the second bottom surface portion 64 are laid on top of each other. In rear portions of the first side surface portion 53 and the second side surface portion 63, mounting holes 25 and 25 are formed respectively. Through these mounting holes 25 and 25, the connection portion 23 is mounted to the gas spring 70.

The left and right skids 40 and 40 are respectively located at outer sides of a machine body width from the left and right swing arms 30 and 30. The left and right skids 40 and 40 respectively present substantially J-shapes in side view, and are composed of left and right perpendicular portions 41 and 41 which extend in a perpendicular direction from the connection portion 23, left and right slide portions 42 and 42 which extend rearward of the machine body 12 (refer to FIG. 1) from lower ends of the left and right perpendicular portions 41 and 41, and raised portions 43 and 43 which are raised from rear ends of the left and right slide portions 42 and 42. The slide portions 42 and 42 are capable of contacting a top surface of the soil 21 and capable of sliding on the top surface.

Although in the present embodiment, the skid 40 is adopted as the contact portion 40, a wheel may be adopted, for example.

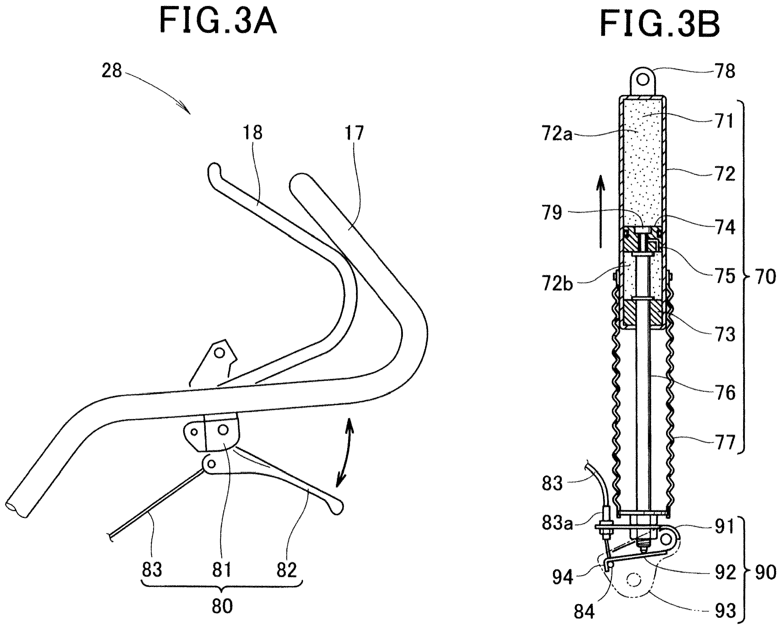

Reference is made to FIGS. 3A and 3B. Next, the height adjusting device 28 will be described.

Reference is made to FIG. 3A. The operation means 80 is composed of a lever support portion 81 which is fixed to the handle 17, an operation lever 82 which is swingably provided at the lever support portion 81, and a wire 83 which has one end portion fixed to a tip end of the operation lever 82. The worker grasps the operation lever 82 with the handle 17, and thereby can pull the wire 83 to the handle 17 side. When the worker releases the operation lever 82, the operation lever 82 swings in a direction to be away from the handle 17 by an urging member (an urging means) which is provided in the operation lever 82.

Reference is made to FIG. 3B. The gas spring 70 is composed of a cylinder 72 which is filled with a gas 71, oil 73 which is stored in the cylinder 72, a piston 74 which divides an inside of the cylinder 72 into one chamber 72a and the other chamber 72b, a communication path 75 which is formed in the piston 74 and allows the one chamber 72a and the other chamber 72b to communicate with each other, a piston rod 76 which is fixed to the piston 74, and a rod cover 77. The gas spring 70 has a characteristic of being normally urged in an extending direction.

A first mounting portion 78 (a mounting point 78) for being mounted to the machine body 12 (refer to FIG. 1) is provided at an upper end of the gas spring 70. A second mounting portion 90 which is mounted to the connection portion 23 (refer to FIG. 2) is provided at a lower end of the gas spring 70.

The second mounting portion 90 is composed of a support plate 91 which supports the lower end of the gas spring 70 and the other end portion 83a of the wire 83, a pressing plate 92 which presses the piston rod 76 which is fixed to one end of the support plate 91, and side portion plates 93 and 93 (only the side portion plate 93 at one side is illustrated) which are provided at both sides of the support plate 91 and the pressing plate 92.

At a tip end of the pressing plate 92, a folded portion 94 which is folded in a direction to be away from the gas spring 70 is formed. To a tip end of the wire 83, a locking member 84 which is locked to the folded portion 94 is mounted. A base end of the piston rod 76 is in contact with the pressing plate 92.

Hereinafter, an operation of the gas spring 70 by the operation means 80 will be described. When the worker grasps the operation lever 82, the wire 83 is pulled to the operation lever 82 side, and the locking member 84 which is provided at the gas spring 70 side displaces to be close to the gas spring 70. The pressing plate 92 which has a tip end locked to the locking member 84 swings. The pressing plate 92 presses the piston rod 76 into the gas spring 70 side.

When the piston rod 76 is pressed in, a valve body 79 is pushed up. When the valve body 79 is pushed up, the one chamber 72a and the other chamber 72b communicate with each other through the communication path 75. By a pressure difference between the one chamber 72a and the other chamber 72b, the gas spring 70 extends. That is, when the operation lever 82 is grasped, the gas spring 70 is brought into an adjustment mode of being able to adjust the length, and extends by pressure of gas.

Next, adjustment of a height of the tilling depth stabilizing apparatus 20 using the operation means 80 and the gas spring 70 will be described.

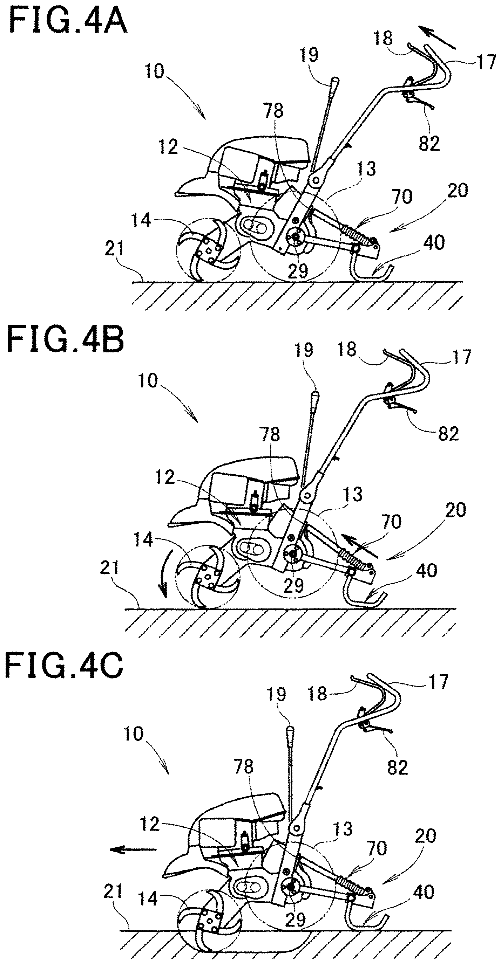

Reference is made to FIG. 4A. When the operation lever 82 is grasped, the gas spring 70 shifts to the adjustment mode. In a state of the adjustment mode, the handle 17 is pushed upward to a front.

Reference is made to FIG. 4B. By pushing the handle 17 upward to the front in the state of the adjustment mode, the gas spring 70 extends, and the machine body 12 and the driving wheels 13 can be lifted up. The gas spring 70 can be said as assisting in lifting work for the machine body 12 and the driving wheels 13.

After the machine body 12 and the driving wheels 13 are lifted up to a predetermined height, the operation lever 82 is released. The gas spring 70 shifts to a fixed mode, and becomes incapable of extending and contracting. Next, the rotary 14 and the driving wheels 13 are rotated. The rotary 14 starts tilling, and the driving wheels 13 idle. As tilling by the rotary 14 advances, the driving wheels 13 displace toward a lower side to be close to the soil.

Reference is made to FIG. 4C. When the driving wheels 13 contact the soil 21, the tiller 10 starts tilling toward a front side. Thereby, after the soil 21 is tilled to a predetermined depth, movement of the tiller 10 can be started.

An operation in a case of making the tilling depth shallow will be described. From the state shown in FIG. 4C, the operation lever 82 is grasped, and the adjustment mode is brought about. While the operation lever 82 keeps being grasped, the handle 17 is pressed down. By pressing down the handle 17 against the urging fore of the gas spring 70, the gas spring 70 extends and contracts. Since the driving wheels 13 and the skids 40 are in contact with the top surface of the soil 21, the rotary 14 is relatively lifted up. Thereby, the tilling depth can be made shallow.

When the handle 17 is pressed down, a force which is stronger than the urging force of the gas spring 70 needs to be applied. However, since a weight of the tiller 10 itself is applied in a direction to compress the gas spring 70, the worker can easily make the tilling depth shallow.

Next, an operation and effect of the present invention will be described.

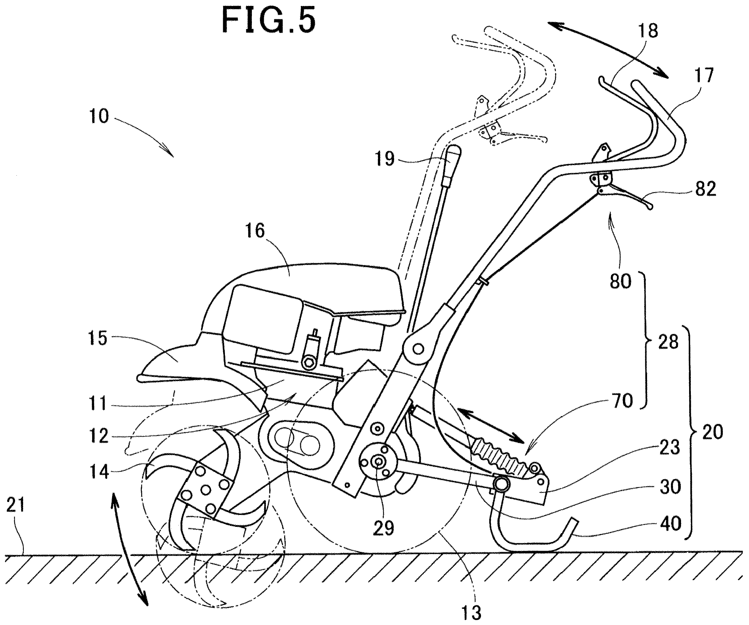

Reference is made to FIG. 5. The tiller 10 has the tilling depth stabilizing apparatus 20 which is located behind the driving wheels 13, and the tilling depth stabilizing apparatus 20 has the skids 40 which are capable of contacting the top surface of the soil 21. The rotary 14 which is located in front of the driving wheels 13 sometimes hits against the hard soil. In that case, a force is applied to the rotary 14 in the direction to be away from the soil, with the driving wheels 13 as an axis. At this time, behind the driving wheels 13, the skids 40 contact the top surface of the soil, whereby the tilling depth of the rotary 14 can be restrained from being shallow. Thereby, the tilling depth of the rotary 14 at the time of tilling can be made constant.

At the time of tilling, the worker grasps the handle 17 to press down the handle 17. In that case, the rotary 14 is to displace in the direction (upward) to be away from the soil. Consequently, the tilling depth of the rotary 14 is difficult to increase. That is, if the tilling depth of the rotary 14 is restrained from being shallow by the tilling depth stabilizing apparatus 20, the tilling depth of the rotary 14 can be made constant.

In addition, the skids 40 which are located at a lowermost end of the tilling depth stabilizing apparatus 20 are capable of sliding on the top surface of the soil 21. Consequently, at the time of tilling, contact of the tilling depth stabilizing apparatus 20 and the soil 21 becomes smooth, and the tilling depth stabilizing apparatus 20 does not become resistance to tilling. Even when the tilling depth stabilizing apparatus 20 is in contact with the top surface of the soil 21, the tiller 10 can be smoothly operated.

In addition, the tiller 10 has the height adjusting device 28 which adjusts the height of the skids 40 relative to the driving wheels 13. Heights of the skids relative to the driving wheels 13 are adjusted by the height adjusting device 28. Hereinafter, specific explanation will be made.

When the worker grasps the operation lever 82, the adjustment mode of being capable of adjusting the length of the gas spring 70 is brought about. That is, the gas spring 70 is brought into an extendable and contractible state (refer to FIGS. 3A and 3B). When the handle 17 is caused to swing up and down, the machine body 12 and the rotary 14 swing. Meanwhile, the swing arms 30 provided at the machine body 12 relatively swing. The skids 40 which are fixed to the swing arms 30 remain to contact the soil 21. The worker sets the tilling depth of the rotary 14 at a predetermined position, and releases the operation lever 82. The gas spring 70 is brought into the fixed mode, and the swing arms 30 become incapable of swinging. The swing arms 30 are fixed to positions contacting the soil in accordance with the tilling depth.

As described above, the swing arms 30, the gas spring 70 and the operation means 80 are adopted, whereby the tilling depth stabilizing apparatus 20 capable of adjusting a height can be easily configured.

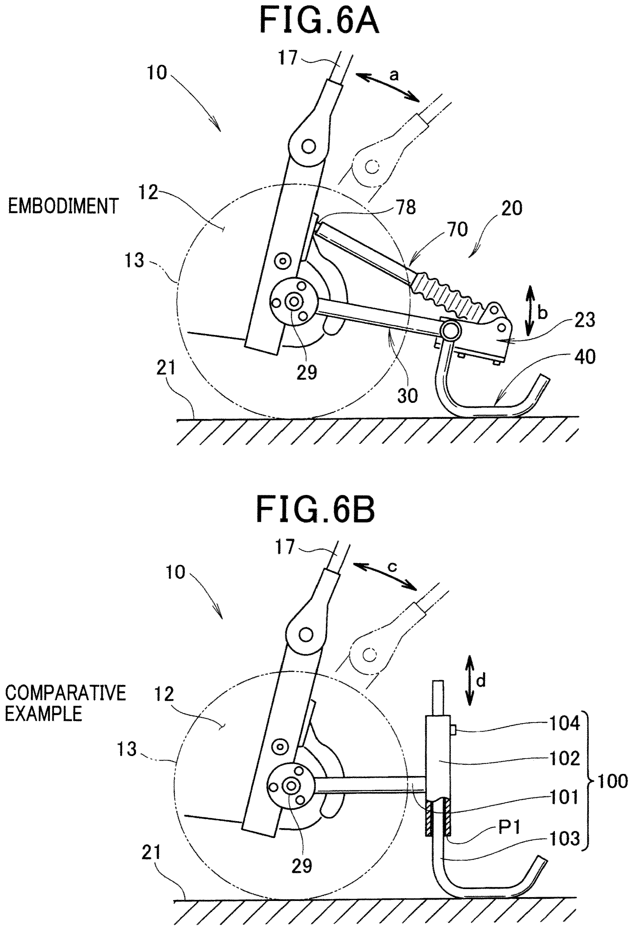

Reference is made to FIG. 6A. In the tilling depth stabilizing apparatus 20, the swing arm 30 swings up and down as shown by an arrow (b) in accordance with swing of the machine body 12 shown by an arrow (a). Thereby, adjustment of the height of the tilling depth stabilizing apparatus 20 relative to the driving wheel 13 is enabled. That is, the swing arm 30 is caused to swing in accordance with the tilling depth of the rotary 14 (refer to FIGS. 4A to 4C), and the skid 40 which is fixed to the swing arm 30 can be caused to contact the top surface of the soil 21.

Reference is made to FIG. 6B. In a comparative example, a height adjusting device 100 which changes in only a vertical direction is provided, with respect to the machine body 12.

The height adjusting device 100 is composed of a support pipe 101 which extends rearward from the machine body 12, a cylinder body 102 which is provided at a rear end of the support pipe 101, a skid 103 which is slidable in the vertical direction on an interior of the cylinder body 102, and a fixing pin 104 for fixing the skid 103 to the cylinder body 102.

As shown by an arrow (c), the machine body 12 swings with the rotating shaft 29 of the driving wheel 13 as a center. Swing of the machine body 12 is accompanied by displacement in the vertical direction and displacement in a longitudinal direction. Meanwhile, as shown by an arrow (d), the skid 103 is to slide in the vertical direction with respect to the cylinder body 102. At this time, for example, the skid 103 contacts a lower end portion P1 of an inner circumferential surface of the cylinder body 102, and interference sometimes occurs to vertical motion of the skid 103. That is, displacement in the longitudinal direction of the machine body 12 can become a hindrance to displacement in the vertical direction of the height adjusting device 100.

Go back to FIG. 6A. When the swing arm 30 is adopted in the tilling depth stabilizing apparatus 20, swing of the machine body 12 shown by the arrow (a), and swing of the swing arm 30 shown by the arrow (b) respectively become smooth, and the height adjustment of the tilling depth stabilizing apparatus 20 is facilitated.

Go back to FIGS. 4A to 4C. The gas spring 70 has a characteristic of being urged in the extending direction. Furthermore, the first mounting portion 78 where the gas spring 70 is mounted to the machine body 12 is located above the rotating shaft 29 of the driving wheels 13 which are the swing shafts for the swing arms 30. The first mounting portion 78 is located above the rotating shaft 29, and therefore, when the swing arms 30 are caused to swing upward to the front, the urging force in the extending direction of the gas spring 70 can be used. In this case, use of the tiller 10 by the worker as follows is facilitated.

When tilling is performed, the machine body 12 and the driving wheels 13 need to be lifted up. At the time of lifting up, the urging force of the gas spring 70 can be used. Since the urging force assists in lifting up the machine body 12 and the driving wheels 13, the worker can easily lift up the machine body 12 and the driving wheels 13.

Although as the extension and contraction mechanism having the urging force, the gas spring 70 is adopted, a simple extension and contraction mechanism which is composed of a cylinder body and a pipe which slides on an interior of the cylinder body may be adopted, for example. Furthermore, for the urging member of the extension and contraction mechanism, an elastic body such as a spring may be used. Besides, the present invention is not limited to the embodiment as long as the operation and the effect of the present invention are provided.

The tiller of the present invention is especially suitable for a tiller in which a rotary and driving wheels are apart from each other.

Provided is an art of making a tilling depth of a rotary constant, in a front rotary type tiller. A tiller (10) has a driving wheel (13) supported by a machine body (12), and having a rotary (14) that tills soil (21), in front of the driving wheel (13), the tiller (10) further has a tilling depth stabilizing apparatus (20) that is located behind the driving wheel (13), and the tilling depth stabilizing apparatus (20) includes a contact portion (40) capable of contacting a top surface of the soil (21) and capable of sliding on the top surface, and a height adjusting device (28) that adjusts a height of the contact portion (40) relative to the driving wheel (13).

### [Reference Signs List]

- 10: Tiller
- 12: Machine body
- 13: Driving wheel
- 14: Rotary
- 20: Tilling depth stabilizing apparatus
- 28: Height adjusting device
- 29: Rotating shaft
- 30: Swing arm
- 40: Skid (contact portion)
- 41: Perpendicular portion
- 42: Slide portion
- 43: Raised portion
- 70: Gas spring (extension and contraction mechanism)
- 78: First mounting portion
- 80: Operation means

## Claims

1. A tiller (10) having a driving wheel (13) supported by a machine body (12), and having a rotary (14) that tills soil, in front of the driving wheel,
**characterized in that** the tiller further comprises a tilling depth stabilizing apparatus (20) that is located behind the driving wheel,
wherein the tilling depth stabilizing apparatus comprises a contact portion (40) capable of contacting a top surface of the soil and capable of sliding on the top surface, and a height adjusting device (28) that adjusts a height of the contact portion relative to the driving wheel.

2. The tiller according to claim 1,
wherein the tilling depth stabilizing apparatus further comprises a swing arm (30) that extends from the machine body and is swingably mounted to the machine body,
the contact portion is fixed to the swing arm, and the height adjusting device has
an extension and contraction mechanism (70) that extends from the machine body to the swing arm and is capable of extending and contracting, and
operation means (80) for switching an adjustment mode in which a length of the extension and contraction mechanism can be adjusted, and a fixed mode in which the length of the extension and contraction mechanism is fixed.

3. The tiller according to claim 2,
wherein the extension and contraction mechanism has urging means that urges in an extending direction, and
a mounting point (78) where the extension and contraction mechanism is mounted to the machine body is located above a swing shaft (29) for the swing arm.
